# EUROPEAN PATENT APPLICATION

(11) **EP 1 531 321 A2**
(43) Date of publication of application: **18.05.2005**
(21) Application number: 04024677.9
(22) Date of filing: 15.10.2004
(51) Int. Cl.: G01C 21/28

(54) **Vehicle navigation apparatus**

(30) Priority: 13.11.2003 JP 2003383458; 24.12.2003 JP 2003428450
(71) Applicant: AISIN AW CO., LTD., Anjo, Aichi 444-1192 (JP)
(72) Inventor: Shimizu, Takanori, Okazaki Aichi 444-8564 (JP); Yamada, Kunihiro, Okazaki Aichi 444-8564 (JP)
(74) Representative: VOSSIUS & PARTNER

(57) **Abstract**

A vehicle navigation apparatus is capable of detecting a current vehicle position with improved accuracy. The reliability factor of a distance coefficient is reduced when a vehicle runs in an area having a large altitude gradient or when a position detection error is detected between a current vehicle position calculated using the distance coefficient and a current vehicle position calculated based on GPS position data. When the vehicle runs at a high speed, the distance coefficient is modified depending on the running speed. After the distance coefficient is determined via learning, if a position detection error is detected for a road which the vehicle has previously traveled, a position detection cost is assigned to the road. Factors that can cause a position detection error are minimized, thereby making it possible to detect a current vehicle position with high accuracy.

## Description

This application claims priority of Japanese Application No. 2003-383458 filed November 13, 2003 and Japanese Application No. 2003-428450 filed December 24, 2003. The teachings of both Japanese Application No. 2003-383458 and Japanese Application No. 2003-428450 are incorporated herein by reference in their entireties, inclusive of their specifications, claims and drawings.

The present invention relates to a vehicle navigation apparatus capable of detecting current vehicle position with improved accuracy.

The distance traveled by a vehicle is measured by counting the number of pulses (vehicle speed pulses) generated in synchronization with rotation of a tire, and multiplying the counted number of pulses by a coefficient (distance coefficient), thereby converting the counted number of pulses into a distance. From the detected traveled distance, the current position of a vehicle is determined. The number of rotations of a tire depends on the type and condition of the tire. However, the vehicle navigation apparatus does not know the type or condition of the tire. In order to minimize the error in detection of the current position caused by a difference in the type or condition of the tire, the distance coefficient is adjusted for each vehicle by means of learning based on map data and travel history data. In general, learning of the distance coefficient is performed by detecting the number of vehicle speed pulses generated during travel of a particular distance (along a straight road) determined based on GPS position data. In order to further increase the accuracy of detection of travel distance, it is also known to detect the altitude of the vehicle using a slope detector.

When a vehicle runs at a high speed, a change in diameter and/or pressure of tires can occur. If such a change occurs, the current vehicle position calculated using the distance coefficient is no longer accurate. To solve this problem, it has been proposed to detect a change in diameter of a tire and to correct the calculated distance traveled by a vehicle, in accordance with the detected change (JP-A-10-239092). However, the solution offered by JP-A-10-239092 fails to sufficiently improve accuracy in current position detection. Furthermore, when a vehicle runs in an area having a rather large altitude gradient an error is introduced into detection of the traveled distance using the distance coefficient determined simply based on learning. For example, when a vehicle travels a road with steep hills, a large difference occurs between a distance on a map and the actual distance traveled by the vehicle, and this difference causes an error in detection of the current position of the vehicle. It has been proposed to detect the altitude of a vehicle using a slope sensor and to correct the current position based on changes in the detected altitude (Japanese Unexamined Patent Application Publication No. 10-253352). However, again, the solution offered fails to sufficiently improve accuracy in current position detection.

Accordingly, it is an object of the present invention to provide a vehicle navigation apparatus with improved accuracy in detection of current vehicle location.

In order to achieve the above object, the present invention provides a vehicle navigation apparatus comprising distance coefficient learning means for learning a distance coefficient indicating the ratio of a distance traveled by a vehicle to the number of vehicle speed pulses, and current position (location) detection means for calculating a current vehicle position using the distance coefficient acquired via learning, wherein the current position detection means sets the reliability of the distance coefficient to be lower when a predetermined condition is satisfied than when the predetermined condition is not satisfied.

In one embodiment of the present invention accuracy of a vehicle navigation apparatus in detection of a current vehicle position is further improved by control means for controlling the distance coefficient learning means, wherein the control means controls the distance coefficient learning means such that if the control means detects existence of a condition that can cause an adverse affect on learning of the distance coefficient, the control means disables the learning of the distance coefficient.

Thus, the present invention greatly improves current position detection accuracy in a navigation apparatus by minimizing various factors that can cause a detection error.

Fig. 1 is a block diagram of an embodiment of a vehicle navigation apparatus according to the present invention.

Figs. 2A and 2B are diagrams showing examples of altitude polygon data.

Fig. 3 is a flow chart of a process for detection of current vehicle position in which the reliability factor of a distance coefficient is lowered as required.

Fig. 4 is a flow chart of another process for detection of current vehicle position in which the reliability factor of a distance coefficient is lowered as required.

Fig. 5 is a flow chart of a current position detection routine executed when the vehicle runs at a high speed.

Fig. 6 is a flow chart of a process for detecting a current vehicle position utilizing a position detection cost.

Fig. 7 is a block diagram of another embodiment of a vehicle navigation apparatus according to the present invention.

Fig. 8 is a flow chart of a process for disabling the learning of the distance coefficient.

Fig. 9 is a diagram of a learning attribute defined in road data.

Fig. 10 is a flow chart of a process for utilizing travel history data.

Preferred embodiments of the present invention will now be described with reference to the accompanying drawings.

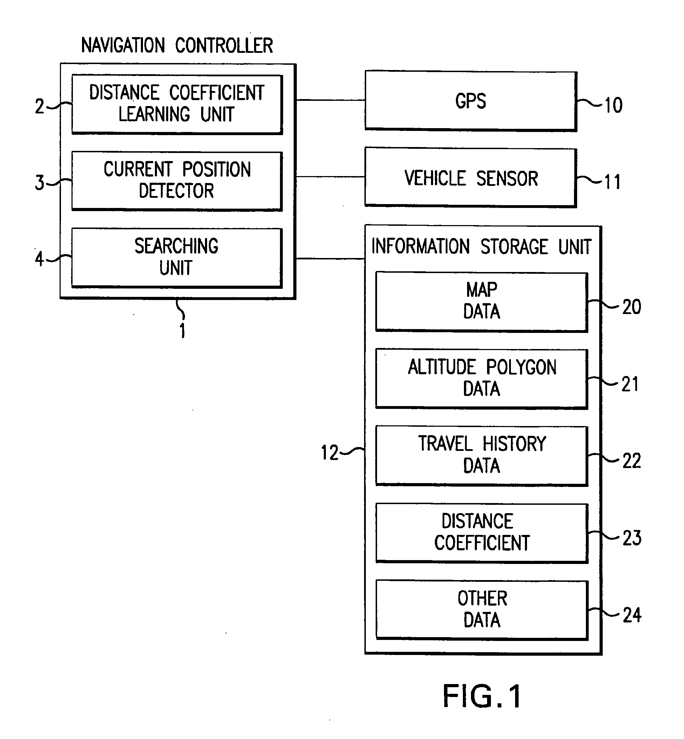

Fig. 1 shows a first embodiment of a vehicle navigation apparatus according to the present invention as including a navigation controller 1 for executing various navigation routines. In the present embodiment, the navigation controller 1 includes a distance coefficient learning unit 2, a current position detector 3, and a searching unit 4. Learning of the distance coefficient and detection of the current position of a vehicle are executed based on data supplied from a GPS (Global Positioning System) 10, data representing pulses corresponding to tire rotation as measured by a vehicle speed sensor 11, and data retrieved by the searching unit 4 from map data 20 stored in an information storage unit 12. In addition to the map data 20, altitude polygon data 21, travel history data 22, distance coefficient data 23, and other data 24 necessary for navigation are also stored in the information storage unit 12.

The distance coefficient learning unit 2 determines the distance coefficient such that, when the vehicle travels a straight road, as determined by data 20 stored in the information storage unit 12, for a given distance, for example 100 m detected based on data supplied from the GPS 10, the distance coefficient used in conversion of the number of pulses into the distance is calculated based on the number of pulses output from the vehicle speed sensor 5 during travel. The calculation of the distance coefficient is repeated as the vehicle travels, thereby learning the distance coefficient for further improvement in accuracy of the distance coefficient.

The current position detector 3 detects the current position of the vehicle from the vehicle speed pulse data supplied from the vehicle speed sensor 11 and the distance coefficient determined via the learning. In the present embodiment, the current position detection accuracy is improved by minimizing various factors that can cause a detection error. More specifically, for example when the vehicle travels a section of road having a large altitude gradient indicated by the altitude polygon data 21, the reliability factor of the distance coefficient is decreased. Even when no altitude polygon data is available, if a large difference between the current position calculated based on the distance coefficient and the current position detected based on GPS position data is frequently found, it is assumed that the vehicle is traveling a road section having a large altitude gradient, and the reliability factor of the distance coefficient is decreased. When the vehicle runs at a high speed, the distance coefficient is adjusted depending on the running speed. After the distance coefficient is determined via learning, if a position detection error is detected on a road which the vehicle has previously traveled, a position detection cost, depending on the error, is assigned to that road. The above-described routines for adjustment of the road coefficient are executed after the distance coefficient has been determined by means of learning during travel of a distance greater than a predetermined value.

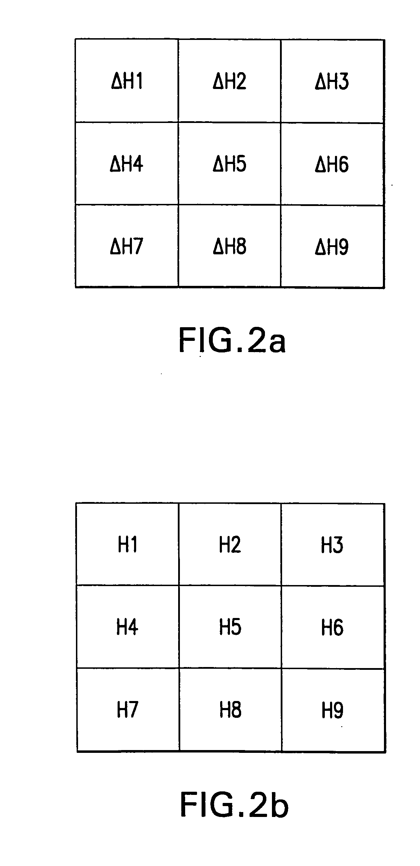

An example of a process for improving the position detection accuracy using altitude polygon data will now be described with reference to Figs. 2A and 2B which show examples of altitude polygon data. In Figs. 2A and 2B, each block indicates an area several tens of meters (for example, 30 meters) square, and coordinates (latitude and longitude) are represented by the respective four corners of each block. In the example shown in Fig. 2A, the altitude difference (the difference between the highest altitude and the lowest altitude) ΔH1, ΔH2 or the like in each area is represented by a corresponding block. In the example shown in Fig. 2B, the average altitude H1, H2 or the like of each area is taken as center altitude data represented by a corresponding block.

When a vehicle travels a road section with altitude polygon data as given in Fig. 2A, there will be a large error between the distance given by a 2-dimensional map and the actual distance traveled by the vehicle because of a large altitude gradient. Thus, there will be a large deviation between the detected current position of the vehicle and a point on the 2-dimensional map. Therefore, when a vehicle travels in an area to which such altitude polygon data is assigned, it is assumed that use of the distance coefficient will cause a position detection error, and the reliability factor of the distance coefficient is set low. In this case, for example, the current position of the vehicle is detected, not based on the distance coefficient, but based on GPS position data, thereby preventing a reduction in position detection accuracy. Where altitude polygon data is assigned to each area in the manner shown in Fig. 2B, if a difference in altitude gradient greater than a predetermined value is detected for average altitude values of adjacent areas, it is determined that use of the distance coefficient will cause a position detection error, and the reliability factor of the distance coefficient is set low.

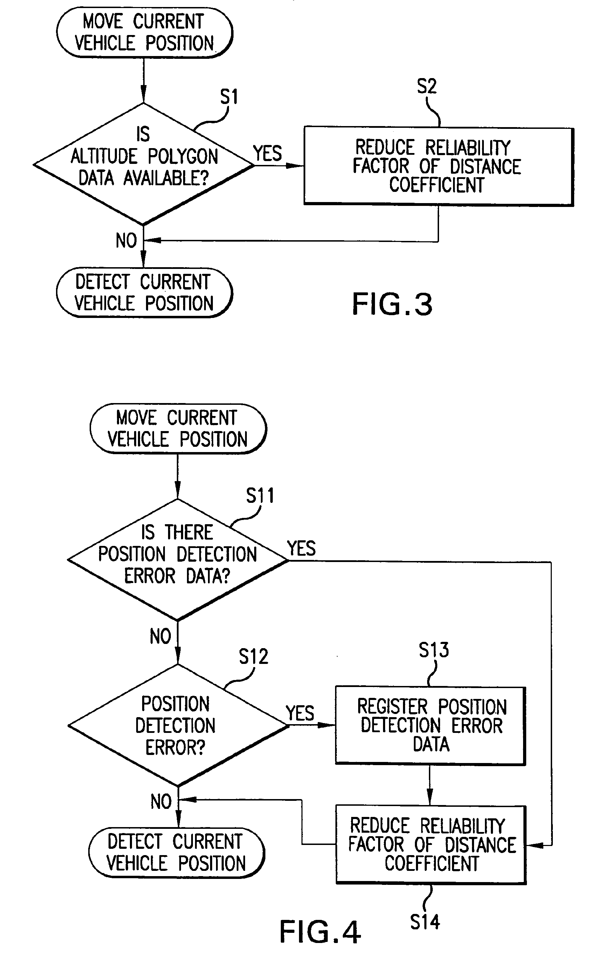

Fig. 3 is a flow chart showing a routine which is executed when a large altitude gradient for given road section is represented by altitude polygon data in the form shown in Fig. 2A. In the routine of Fig. 3, the reliability factor of the distance coefficient is set to be low in detection of the current position of the vehicle.

In step S1 it is determined if the vehicle is running in an area for which altitude polygon data is available. If altitude polygon data is available, it is determined that there is a large altitude gradient and thus use of the distance coefficient will cause a position detection error. In this case, the reliability factor of the distance coefficient is reduced (step S2). After the reduction in the reliability factor of the distance coefficient, detection of the current position of the vehicle is executed. In the case in which altitude polygon data is given in the form shown in Fig. 2B, the altitude gradient is determined by calculating the difference in average altitude. In this case, when a large altitude gradient is detected, the reliability of the distance coefficient is reduced.

When the vehicle travels in an area having a large altitude gradient for which no altitude polygon data is available, a similar position detection error occurs. In this case, the reliability factor for the distance coefficient is also reduced, as described in detail below.

In detection of the current position of the vehicle in accordance with the routine of Fig. 4, the reliability factor of the distance coefficient is set low. If a large difference is detected between the current position calculated using the distance coefficient determined by means of learning and the current position determined based on GPS position data, data (position detection error data) indicating a position detection error in an area with a predetermined unit size is recorded. In general, such a position detection error occurs because of a large altitude gradient, and the position detection error can be handled in a manner similar to the routine of Fig. 3 in which altitude polygon data is used to indicate an altitude gradient. In subsequent travel of the vehicle through a given area, it is determined whether or not position detection error data has been recorded for that area (step S11). If there is such recorded data, the reliability factor of the distance coefficient is reduced (step S14), and detection of the current position of the vehicle is performed using GPS position data. If there is no recorded position detection error data, it is determined whether there is a large difference between the current position calculated using the distance coefficient and the current position determined based on GPS position data. If a large difference is detected, position detection error data associated with a current unit area is recorded (step S13), and detection of the current position of the vehicle is executed after the reliability factor of the distance coefficient is reduced (step S14).

The position detection error that can occur when a vehicle travels through an area having a large altitude gradient has been discussed above. A position detection error can also occur due to tire expansion when the vehicle runs at a high speed on an expressway or a toll road. Such a position detection error can be handled by determining or learning a distance coefficient dependent on running speed, as described below.

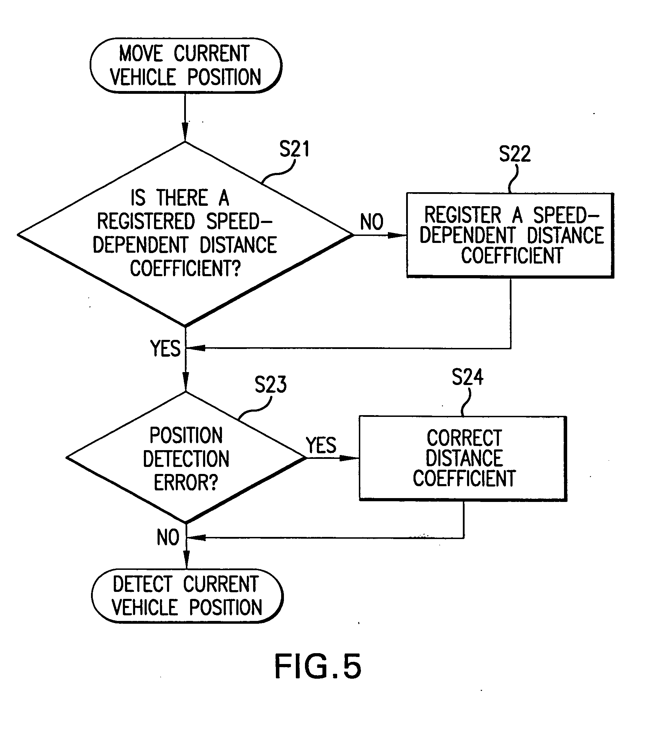

Fig. 5 is a flow chart of a current position detection routine executed when a vehicle runs at a high speed. When a vehicle runs at a high speed, air pressure in the tires increases due to heat generated by friction of the tires, and thus the tires expand. The expansion of the tires causes the vehicle to travel a greater distance for the same number of rotations. This means that if the current position of the vehicle is calculated using the distance coefficient determined via learning performed at a lower (normal) speed, the position calculated at a higher speed will deviate from the position determined based on GPS position data. To solve this problem, the distance coefficient is determined by means of learning for each of various different speed ranges, such as 80 km to 90 km, 90 km to 100, 100 km to 110 km, and so on. The distance coefficient determined for each speed range is recorded. When the vehicle runs at a high speed, it is determined whether there is a recorded distance coefficient corresponding to that high speed (step S21). If no recorded distance coefficient is found, a distance coefficient corresponding to the running speed is determined and recorded (step S22). It is then determined whether the position calculated using the recorded distance coefficient has a deviation (step S23). If a deviation in position is detected, the recorded distance coefficient is corrected by learning (step S24). The accurate current position of the vehicle is detected using the distance coefficient corrected in the above-described manner depending on the running speed.

When a deviation is detected between the position calculated using the distance coefficient and the position detected based on GPS position data for a particular road that has been traveled before, it is determined that the deviation is due to a change in the road, and a position detection cost depending on the deviation is assigned to that road and recorded. For example, if a distance of 100 m is incorrectly detected as 110 m, then a position detection cost of 11/10 is assigned.

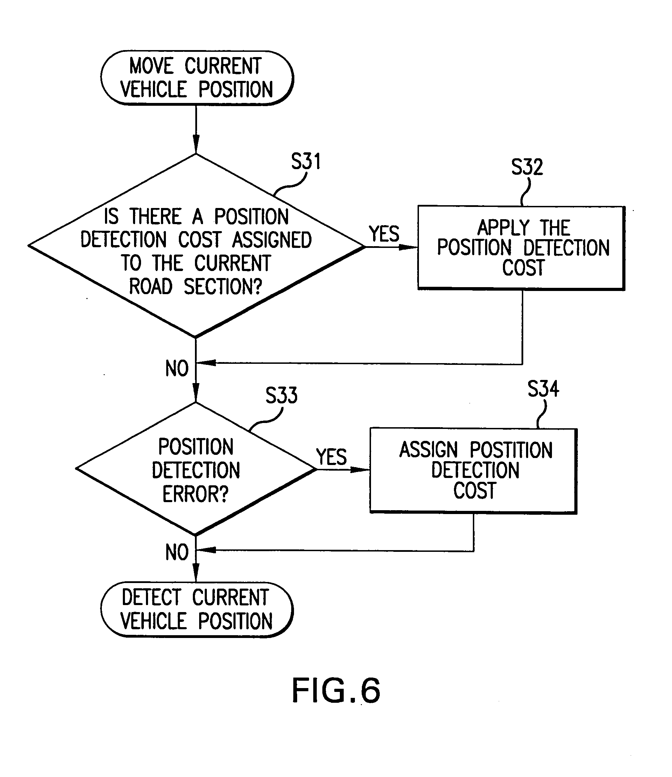

A specific example of a process for assigning a position detection cost to a road is described in Fig. 6. When a vehicle commences travel of a given road section, it is determined whether there is a position detection cost assigned to that road section (step S31). If it is determined that there is a position detection cost assigned to that road section, the position detection cost is used (step S32). It is then determined whether there is a deviation between the position calculated using the distance coefficient and the position detected based on GPS position data (step S33). If a deviation in position is detected for a road section to which no position detection cost is assigned, a position detection cost is determined and assigned to that road section (step S34). On the other hand, if a deviation in position is detected where a position detection cost is used, the position detection cost is re-determined by learning and assigned to that road section. The current position of the vehicle is then detected taking into account the position detection cost assigned in this manner.

In the above-described examples, it is assumed that map data used in learning of the distance coefficient is accurate. However, map data is not necessarily always correct. For example, if a deviation in position occurs for a particular road after learning of a distance coefficient has been performed over a particular travel distance until the difference between the position detected using the distance coefficient and the position detected based on GPS position data has become smaller than a value predetermined for roads in general, the deviation can be regarded as being due to inaccuracy in map data. In this case, a position detection cost is properly determined and assigned to the road, or the map data is corrected.

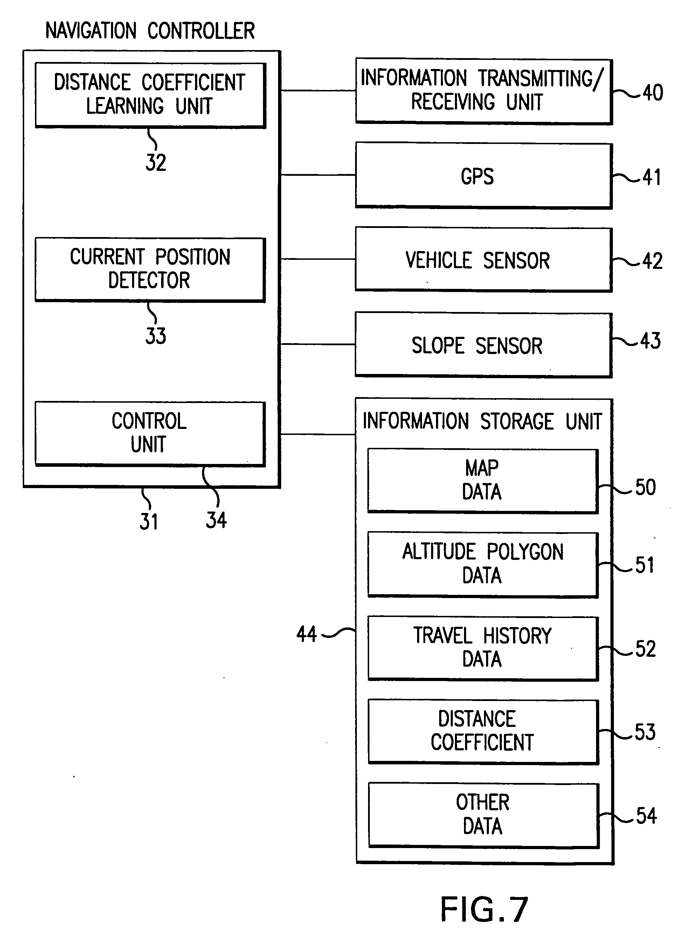

Now, a second embodiment of the present invention will be described with reference to Fig. 7 which shows a navigation controller 31 for executing various navigation routines. In this second embodiment, the navigation controller 31 includes a distance coefficient learning unit 32, a current position detector 33 and a control unit 34. Under control of the control unit 34, learning of the distance coefficient and detection of the current position of a vehicle are performed based on data received via an information transmitting/receiving unit 40, data supplied from a GPS 41, pulse data corresponding to tire rotation measured by a vehicle speed sensor 42, information supplied from a slope sensor 43, and map data 50 stored in an information storage unit 44. In addition to the map data 50 including road data defining a learning disable attribute, altitude polygon data 51, travel history data 52, distance coefficient data 53, and other data 54 necessary for navigation are also stored in the information storage unit 44.

Under control of the control unit 34, the distance coefficient learning unit 32 determines the distance coefficient such that when a vehicle travels a straight road, for example 100 m as detected based on data supplied from the GPS 41, the distance coefficient used in conversion of the number of pulses into distance is calculated based on the number of pulses output by the vehicle speed sensor 42 during that travel. The calculation of the distance coefficient is repeated as the vehicle travels, thereby learning the distance coefficient. A sufficiently good distance coefficient can be obtained after completion of learning for a distance of about 10 km. A further improvement in accuracy of the distance coefficient can be achieved by performing further learning. The current position detector 33 detects the current position of the vehicle from the vehicle speed pulse data supplied from the vehicle speed sensor 42 and the distance coefficient determined via the learning.

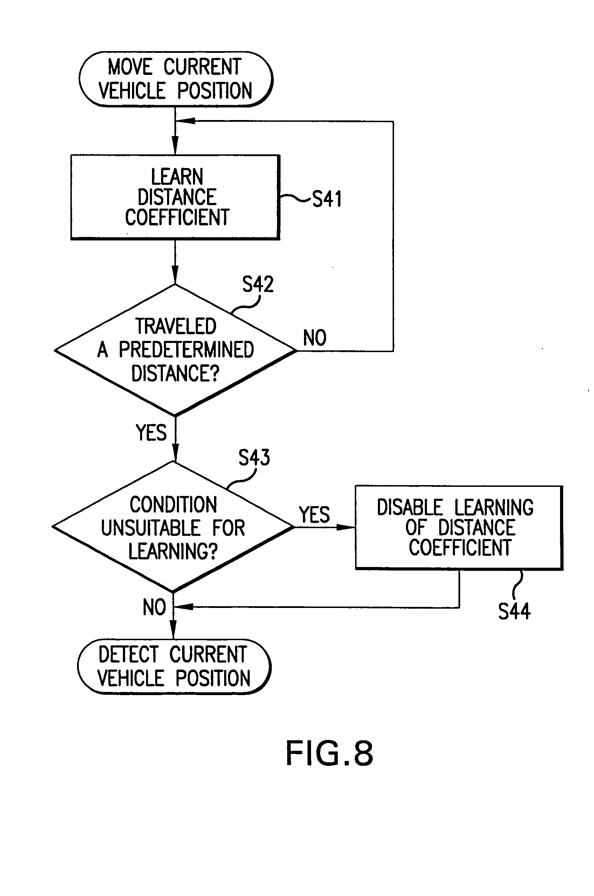

Fig. 8 shows a routine for disabling the learning of the distance coefficient. In the present embodiment, learning of the distance coefficient is performed as the vehicle travels (step S41). In step S42 it is determined whether the vehicle has run a predetermined distance, for example 10 km, for learning of the distance coefficient. As the vehicle travels beyond the predetermined distance for which the distance coefficient has been determined, the control unit 4 determines whether there is a factor rendering learning unsuitable (that is, whether learning should be disabled because of such a factor) (step S43). If it is determined that learning should be disabled, the control unit 4 controls the distance coefficient learning unit so that the learning of the distance coefficient is no longer executed, because learning of the distance coefficient under unsuitable conditions can cause the correctly determined distance coefficient to be incorrectly modified, and the incorrect modification of the distance coefficient can cause a reduction in position detection accuracy.

For example, the learning is disabled when (1) the altitude polygon data 51 indicates that there is a large altitude gradient in the area where the vehicle is traveling, (2) the slope sensor 43 detects a slope greater than a predetermined value (for example 10°) in the area where the vehicle is traveling, (3) information received via the information transmitter/receiver unit 40 indicates that slippage on the road surface is a possibility because of a particular weather condition or road condition, and a user inputs such information to the navigation apparatus, (4) a learning disable attribute is set for a road section on which the vehicle is traveling, or (5) the vehicle is traveling in an area that has been determined, in past travel, to be unsuitable for learning. As a matter of course, when the vehicle runs in an area having no factor causing disabling of learning, learning of the distance coefficient is continued to improve the position detection accuracy.

When the vehicle runs in an area for which altitude polygon data in the form shown in Fig. 2A is recorded, a large altitude gradient can cause a deviation between a distance on a 2-dimensional map and an actual distance traveled by the vehicle, that is, a large position detection error can occur. Therefore, when, after the distance coefficient has been correctly determined, the vehicle travels in such an area for which altitude polygon data has been recorded, learning of the distance coefficient is disabled. In the case of an area for which altitude polygon data in the form shown in Fig. 2B is recorded, if the difference between average altitude values of adjacent blocks is greater than a predetermined value, the area is regarded as unsuitable for learning, and learning of the distance coefficient is disabled.

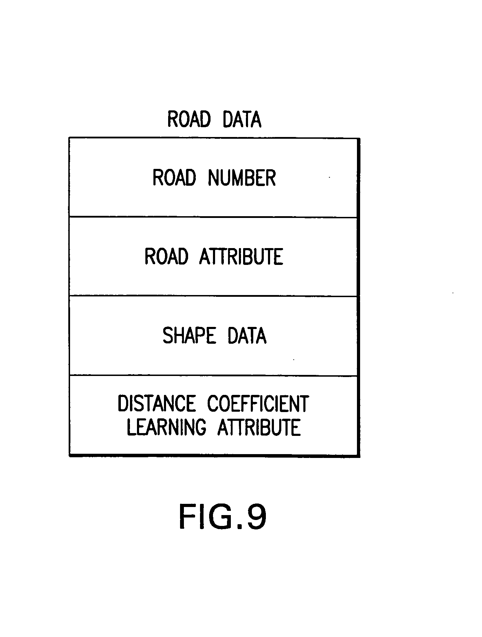

Fig. 9 is a diagram showing a learning attribute defined in road data.

In the present embodiment, the stored road data includes a distance coefficient learning attribute in addition to a road number, a road attribute, and shape data. A road number is assigned to each direction of each link between adjacent nodes spaced along a road. A road attribute is used to indicate the road class (expressway, national road, prefectural road, etc.) the road type such as an elevated road or an underground road, the road width, the number of lanes, etc. Shape data includes sequences of nodes each including coordinate data, altitude data, and a node attribute (indicating whether the node is an intersection node, a simple node, or a road end), wherein each two adjacent nodes are connected by a link. The distance coefficient learning attribute is in the form of a flag indicating whether learning of the distance coefficient is enabled or disabled for a road link or links. When learning of the distance coefficient is disabled for a road section (link or links), the flag is set to "1", and, the flag is set to "0" when learning of the distance coefficient is enabled. For example, roads in mountain areas are greatly sloped and unsuitable for learning, and thus the flag is set to "1". The distance coefficient learning attribute may be defined for each road number, each link, plural adjacent (consecutive) links or each node.

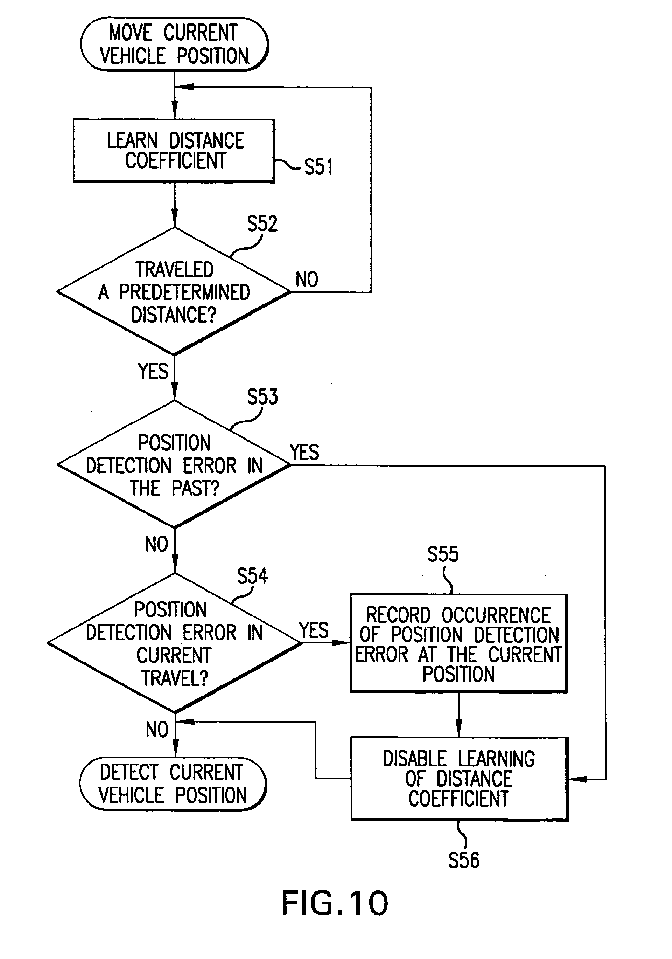

Fig. 10 is a flow chart of a process using travel history data.

In the present embodiment, as the vehicle continues to travel after the distance coefficient has been properly determined by means of learning, if a large deviation occurs between the current vehicle position calculated using the distance coefficient and the current vehicle position determined based on GPS position data, the area where the large deviation is detected is regarded as an error-prone area, and data indicating this fact is recorded. When the vehicle again travels this area, it is determined that learning of the distance coefficient should not be performed, and learning is disabled.

In step S51 learning of the distance coefficient is executed as the vehicle travels. In step S52 it is determined whether the vehicle has traveled a predetermined distance for learning of the distance coefficient. When the vehicle continues travel after the distance coefficient has been determined via running of the predetermined distance, the control unit 4 determines whether the vehicle is then running in an area where a large position detection error has been detected in previous travel (step S53). If it is determined that a large position detection error has occurred in the past in this area, the control unit 4 disables the learning of the distance coefficient (step S56). On the other hand, if no data indicating a large position detection error for this area has been recorded in the travel history data, it is determined whether there is a large deviation between the current vehicle position calculated using the distance coefficient and the current vehicle position determined based on GPS position data (step S54). If a deviation is detected, position-error data indicating an occurrence of a position detection error in a current area with a predetermined unit size is recorded (step S55), and learning of the distance coefficient is disabled.

In the embodiment described above, after the distance coefficient has been properly determined via learning over a predetermined distance, a determination is made as to whether or not to disable learning of the distance coefficient. Alternatively, determination as to whether to disable learning of the distance coefficient may be started at the beginning of or in the middle of the initial learning of the distance coefficient. In this case, the initial learning of the distance coefficient is performed with higher accuracy because learning of the distance coefficient is not performed in an area regarded as being unsuitable, even where the initial learning was to be based on a longer time.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A vehicle navigation apparatus comprising:
distance coefficient learning means for learning a distance coefficient indicating ratio of a distance traveled by a vehicle to a number of vehicle speed pulses; and
current position detection means for calculating a current vehicle position using the learned distance coefficient, wherein the current position detection means sets the reliability of the distance coefficient to be lower when a predetermined condition is satisfied than when the predetermined condition is not satisfied.

2. A vehicle navigation apparatus according to claim 1, further comprising information storage means for storing map data and altitude data indicating altitudes, wherein the predetermined condition is that the vehicle is traveling on a road in an area having an altitude gradient greater than a predetermined value.

3. A vehicle navigation apparatus according to claim 1 or 2, wherein the predetermined condition is that the vehicle is traveling in an area where a position detection error between a current vehicle position calculated using the distance coefficient and a current vehicle position determined based on GPS position data has been previously detected.

4. A vehicle navigation apparatus according to claim 3, wherein when a position detection error occurs, data indicating the occurrence of the position detection error is registered for an area of a predetermined unit size.

5. A vehicle navigation apparatus comprising:
distance coefficient learning means for learning a distance coefficient; and
current position detection means for calculating a current vehicle position using the learned distance coefficient;
wherein the distance coefficient learning means registers different distance coefficients corresponding to different running speeds, and
wherein the current position detection means calculates the current vehicle position using a distance coefficient registered for current vehicle speed.

6. A vehicle navigation apparatus comprising:
distance coefficient learning means for learning a distance coefficient; and
current position detection means for calculating a current vehicle position using the learned distance coefficient;
wherein the distance coefficient learning means assigns a position detection coefficient to a road section so that, if after the distance coefficient has been learned, a position detection error is detected for a road section previously traveled by the vehicle, a position detection cost corresponding to the detected position detection error is assigned to the road section, and
wherein the current position detection means detects the current vehicle position by applying the position detection cost to a road section if the position detection cost has been assigned to the road section.

7. A vehicle navigation apparatus comprising:
distance coefficient learning means for learning a distance coefficient; and
current position detection means for calculating a current vehicle position using the learned distance coefficient;
wherein the distance coefficient learning means executes learning of the distance coefficient until the position detection error between the current vehicle position calculated using the distance coefficient and the current vehicle position calculated based on GPS position data becomes less than a predetermined value, and, if after learning of the distance coefficient, a position detection error greater than a predetermined value is detected for a particular road section, the distance coefficient learning means assigns a position detection cost corresponding to the detected position detection error to the road section in map data or corrects the map data.

8. A vehicle navigation apparatus comprising:
distance coefficient learning means for learning a distance coefficient indicating ratio of a distance traveled by a vehicle to number of vehicle speed pulses; and
control means for controlling the distance coefficient learning means, so that if the control means detects existence of a condition that can cause an adverse affect on learning of the distance coefficient, the control means disables the learning of the distance coefficient.

9. A vehicle navigation apparatus according to claim 8, further comprising information storage means for storing map data and altitude data indicating altitudes, and
wherein the control means disables the learning of the distance coefficient when the vehicle is running on a road in an area having an altitude gradient greater than a predetermined value.

10. An apparatus according to claim 8 or 9, further comprising inclination detection means for detecting an inclination of the vehicle, and
wherein the control means disables the learning of the distance coefficient when the inclination detection means indicates that the vehicle is inclined at an angle greater than a predetermined value.

11. An apparatus according to claim 8, 9 or 10, wherein the control means disables the learning of the distance coefficient responsive to receipt of information indicating existence of a condition tending to cause the vehicle to slip on a road surface.

12. An apparatus according to claim 8, 9, 10 or 11, wherein the control means disables the learning of the distance coefficient when a learning disable attribute is included in road data for an area in which the vehicle is traveling.

13. An apparatus according to claim 8, 9, 10, 11 or 12, wherein the control means controls the distance coefficient learning means so that, after the distance coefficient learning means has learned the distance coefficient over a total distance equal to or greater than a predetermined value, if the control means detects a condition that can adversely affect learning of the distance coefficient, the control means disables the learning of the distance coefficient.

14. A vehicle navigation apparatus according to claim 13, wherein the control means disables the learning of the distance coefficient when the vehicle travels in an area that has been determined, in previous travel, to be unsuitable for learning.
